# EUROPÄISCHE PATENTSCHRIFT

(11) **EP 4 024 685 B1**
(45) Veröffentlichungstag und Bekanntmachung des Hinweises auf die Patenterteilung: **03.05.2023**
(21) Anmeldenummer: 20217788.7
(22) Anmeldetag: 30.12.2020
(51) Int. Cl.: H02K 15/12

(54) **VERFAHREN ZUM HERSTELLEN EINES ROTORS EINES WINDENERGIEANLAGENGENERATORS SOWIE VORRICHTUNG ZUM HERSTELLEN DES ROTORS**
METHOD FOR MANUFACTURING A ROTOR OF A WIND TURBINE GENERATOR AND DEVICE FOR PRODUCING THE ROTOR
PROCÉDÉ DE FABRICATION D'UN ROTOR D'UNE ÉOLIENNE, AINSI QUE DISPOSITIF DE FABRICATION DU ROTOR

(43) Veröffentlichungstag der Anmeldung: 06.07.2022
(73) Patentinhaber: Wobben Properties GmbH, 26607 Aurich (DE)
(72) Erfinder: Freese, Michael, 26607 Aurich (DE); Schrobsdorff, Simon, 26556 Eversmeer (DE)
(74) Vertreter: Eisenführ Speiser

(56) Entgegenhaltungen:
- EP-A2- 0 553 899
- DE-A1-102012 208 550
- US-A- 3 456 615
- US-A- 3 527 662
- US-A1- 2009 156 712

## Beschreibung

Die Erfindung betrifft den Bereich der Windenergieanlagen und hierbei insbesondere ein Verfahren für die Herstellung eines Rotors eines Windenergieanlagengenerators, also eines Windenergieanlagengeneratorrotors, sowie eine Vorrichtung für die Herstellung. Ferner betrifft die Erfindung einen Rotor eines Windenergieanlagengenerators und eine Windenergieanlage mit dem Rotor, der nach dem Verfahren und/oder der Vorrichtung hergestellt ist.

Aus dem Stand der Technik sind eine Vielzahl unterschiedlicher Schritte zum Herstellen eines Windenergieanlagengeneratorrotors bekannt. Die vorliegende Erfindung betrifft im Speziellen die Anordnung und Fixierung von Spulen an Polschuhen des Windenergieanlagengeneratorrotors, der im folgenden kurz Rotor genannt wird. Die Erfindung bezieht sich demnach auf Rotoren mit einer Erregerwicklung. Demgegenüber sind Rotoren mit Permanentmagneten und somit einer Permanenterregung bekannt, für die die Erfindung nicht anwendbar ist.

Zur Anordnung und Fixierung von Spulen an einem Rotor werden die Spulen üblicherweise nach Bereitstellen eines Rotors, der mehrere Polschuhe aufweist, an den Polschuhen angeordnet. Ferner werden die Rotoren nach dem Anordnen der Spulen vollständig in ein Tränkbad getränkt, in dem ein Bindemittel bereitgestellt ist, um die Spulen an den Polschuhen des Rotors fest zu fixieren. Nach dem Tränken muss das beim Tränken noch verflüssigte Bindemittel aushärten, wobei der Rotor hierzu erwärmt wird. Dies erfolgt, indem der Rotor einer Wärme ausgesetzt wird. Das Dokument US 2009/0156712 A1 befasst sich mit einem Verfahren zum Fixieren von Spulen eines Rotors durch einen Imprägnierprozess, wobei das Dokument insbesondere auf die Ausbildung der Zusammensetzung des Stoffes zum Imprägnieren bezogen ist. Das Dokument US 3,527,662 A befasst sich ebenfalls mit dem Imprägnieren rotierender Strukturen und offenbart insbesondere eine Vorrichtung zum Imprägnieren von mit Spulen bestückten Strukturen. In beiden Dokumenten wird das erwärmen des Rotors beschrieben.

Der Vorgang des Erwärmens des Rotors dauert sehr lange, insbesondere, da die von außen zugeführte Wärme bis in die unteren Lagen der Spulen vorgedrungen sein muss, um auch hier das Bindemittel auszuhärten. Daher ist es bekannt, um diesen Erwärmungsprozess zu beschleunigen, ein durch die Spulen erzeugbares Erregerfeld bereits vor dem tatsächlichen Betrieb einzuschalten. So wird ein Strom in den Spulen erzeugt, der aufgrund des Widerstands der Spulen zu einer Erwärmung der Spulen selbst führt. Der Vorgang des Erwärmens kann so signifikant verkürzt werden.

Das Erregerfeld selbst sorgt jedoch dafür, dass sich die zum Einschaltzeitpunkt noch nicht fixierten Spulen durch entstehende Magnetfelder aus ihrer vorgesehenen Position verrücken oder verformen. Um dieses Verrücken oder Verformen der Spulen zu verhindern, werden die Spulen durch unterschiedliche Haltevorrichtungen und/oder zunächst in ihrer Position nach dem Anordnen fixiert. Hierbei werden beispielsweise Abstandshalter als Haltevorrichtungen verwendet.

Der Einsatz von Bandagen und Abstandshaltern zum Halten der Spulen in ihren Positionen oder Formen vor einem Einschalten des Erregerfelds zum Aushärten des Bindemittels ist sehr aufwendig und bringt teilweise auch nicht den gewünschten Erfolg, da, beispielsweise beim Einsatz von Bandagen, insbesondere, wenn diese aus einem Textilmaterial bestehen, auch diese Bandagen gewissen Dehnungen unterliegen, so dass weiterhin, wenn auch minimiert, ein Verrutschen oder Verformen der Spulen möglich ist.

Aufgabe der vorliegenden Erfindung ist es den Problemen des Standes der Technik zu begegnen. Dabei ist es insbesondere Aufgabe der vorliegenden Erfindung, ein Verfahren zum Herstellen eines Rotors zu finden, bei dem nach dem Anordnen der Spulen im Wesentlichen kein Verrutschen oder Verformen der Spulen für die weiteren Herstellungsschritte resultiert, wobei gleichzeitig die Dauer eines Erwärmungsprozesses gegenüber dem Stand der Technik vorzugsweise zumindest nicht wesentlich verlängert werden soll. Zumindest soll eine Alternative zum Stand der Technik geschaffen werden.

Hierzu betrifft die Erfindung ein Verfahren nach Anspruch 1.

Demnach betrifft die Erfindung ein Verfahren zum Herstellen eines Windenergieanlagengeneratorrotors einer Windenergieanlage, der im Folgenden kurz Rotor genannt wird. Der Rotor eines Windenergieanlagengenerators wird hierbei erfindungsgemäß zumindest mit den folgenden Schritten hergestellt. Zunächst wird ein Rotorgrundkörper bereitgestellt, der mehrere Polschuhe aufweist. Vorzugsweise umfasst der Rotorgrundkörper somit die mehreren Polschuhe und eine Rotorscheibe, an der die Polschuhe angeordnet oder nach deren Herstellung angebracht werden. An mindestens zwei benachbarten Polschuhen wird jeweils eine Spule angeordnet. Diese Spulen der zwei benachbarten Polschuhe bilden dann zwei benachbarte Spulen.

Vorzugsweise umfasst jeder Polschuh, der auch Erregerpol genannt wird, einen Polschaft und einen Polkopf. Der Polschaft dient als zentraler Körper, um den die Spule gewickelt bzw. angeordnet ist, wohingegen der Polkopf dient, um Feldlinien, die beim Erzeugen eines Magnetfelds mit der entsprechenden Spule entstehen, in geeigneter Weise für den Betrieb des Rotors zu führen. Besonders bevorzugt sind die Polschuhe auf einer Rotorplatte befestigt, die im Wesentlichen zylinderförmig im Falle eines als Innenläufer ausgestalteten Generators ausgebildet ist. Die Rotorplatte liegt demnach vorzugsweise in Form eines Zylinders vor, auf dessen Mantelfläche gleichmäßig in Umlaufrichtung verteilt Polschuhe angeordnet sind. Der Polschaft jedes Polschuhs ist an der Rotorplatte mit einem Ende des Polschafts befestigt ist, wohingegen am anderen Ende des Polschafts der Polkopf angeordnet ist.

Nach dem Anordnen der benachbarten Spulen wird ein Strom in die Spulen eingespeist oder eine Spannung an die benachbarten Spulen angelegt. Durch den eingespeisten Strom oder die angelegte Spannung wird ein Strom in den benachbarten Spulen erzeugt oder in die benachbarten Spulen eingeprägt, der so in den benachbarten Spulen fließt. Erfindungsgemäß wird der Strom in den benachbarten Spulen derart erzeugt, dass der Umlaufsinn einer technischen Stromrichtung in jeder der Spulen der benachbarten Spulen gleich ist. Der Umlaufsinn kann auch Umlaufrichtung, Drehsinn oder Drehrichtung genannt werden. Der Umlaufsinn kann in beiden Spulen entweder rechtsdrehend oder in beiden Spulen linksdrehend sein. Der Umlaufsinn wird hierbei aus einer Draufsicht auf die Rotorpole gesehen, so dass vorzugsweise eine Mantelfläche der Rotorscheibe als Bezugsebene gesehen werden kann. Demnach wird durch den erzeugten Strom in den benachbarten Spulen jeweils ein Magnetfeld erzeugt, wobei das Magnetfeld der Spulen eine Kraft erzeugt, so dass zwischen zwei Rotorpolen liegende Schenkel der benachbarten Spulen voneinander weggezogen oder weggedrückt werden.

Die Schenkel der Spulen werden somit für ein Aushärten eines Bindemittels nach einem Tränkprozess durch das Einprägen eines Stroms in die Spulen erwärmt. Hierbei wird jedoch eine gegenüber einer für einen Betrieb notwendige Schaltung der Spulen geändert. Der Erfindung liegt die Erkenntnis zugrunde, dass durch eine geänderte Schaltung der Spulen ein Magnetfeld in besonderer Weise so erzeugt wird, dass hierdurch Kräfte, die auf die Schenkel der Spulen wirken, ausgenutzt werden können, um die Spulen gegen die Polschuhe, nämlich insbesondere die Polschäfte der Polschuhe zu drücken. Der Gefahr eines ungewünschten Verformens im Sinne eines Ausbauchens oder Verrundens wird somit entgegengewirkt. Ferner werden bei einer üblichen Schaltung entstehende Kräfte, die die Spulen in Richtung auf die Rotorscheibe ziehen, vermieden, so dass ein Verrutschen verhindert wird.

Insbesondere liegt der Erfindung die Erkenntnis zugrunde, dass üblicherweise für einen Erwärmungsprozess bei der Herstellung von Spulen die Erregerwicklung des Rotors wie im gewöhnlichen Betrieb aktiviert wird. Das heißt, dass durch die übliche Schaltung normalerweise in benachbarten Spulen ein Strom in zueinander entgegengesetzter Umlaufrichtung eingeprägt wird. Hierdurch entsteht ein Magnetfeld, das von einem Schenkel einer Spule, nämlich einem Spulen-Schenkel, von zwei zwischen zwei Rotorpolen liegenden Schenkeln der benachbarten Spulen zu einem zweiten Schenkel einer anderen Spule der zwischen zwei Rotorpolen liegenden Schenkeln der benachbarten Spulen zeigt. Dieses Magnetfeld führt zu einer Kraft der beiden zwischen zwei Rotorpolen liegenden Schenkel, die zum Zentrum des Rotors, also insbesondere in Richtung auf die Rotorscheibe zeigt. Diese Kraft trägt einen großen Beitrag zum Verrutschen der Spulen während eines Aushärtens oder Erwärmungsprozesses bei. Durch das Verrutschen besteht die Gefahr, dass die Spule nahe zur Rotorscheibe fixiert wird und durch diese Nähe geringe Kriechstrecken zwischen Spule und Rotorscheibe entstehen, die nicht gewünscht sind.

Durch das erfindungsgemäße Schalten oder Einprägen eines Stroms in die Spulen entstehen demgegenüber in beiden Schenkeln zweier Spulen, die zwischen zwei Rotorpolen benachbart liegen, Magnetfelder, die radial nach innen gerichtet sind. Daraus resultieren Kräfte, die die Schenkel der zwei benachbarten Spulen in Richtung auf den Polschuh drücken. Aus diesem Grund wird nicht nur ein Verrutschen der Spulen in Richtung der Rotorscheibe entgegengewirkt, sondern es wird auch ein Ausbeulen oder Ausbauchen der Spulen, also ein ungewünschtes Verformen, verhindert. Die Spulen werden sogar vorteilhafterweise an den Polschuh herangezogen, wobei diese nach dem Fixieren in dieser Form verbleiben.

Ein Bandagieren oder manuelles Fixieren mit Abstandshaltern der Spulen ist daher nicht mehr nötig.

Gemäß einer ersten Ausführungsform wird der Rotor vor dem Einspeisen eines Stroms in oder Anlegen einer Spannung an die benachbarten Spulen getränkt oder vergossen. Der Rotor wird dazu vorzugsweise in ein Tränkbecken, das vorzugsweise mit einem Bindemittel, wie einem Tränkharz oder einer anderen Vergussmasse gefüllt ist, eingetaucht oder es wird eine Vergussmasse, die vorzugsweise ein Bindemittel ist, über den Rotor fließen gelassen, so dass sich das Bindemittel oder die Vergussmasse in Hohlräumen und Senken ablagert.

Gemäß einer weiteren Ausführungsform wird nach oder während des Einspeisens eines Stroms in oder Anlegen einer Spannung an die benachbarten Spulen der Rotor mit einer Wärmequelle erwärmt. Dieses Erwärmen kann auch als Backen bezeichnet werden und umfasst vorzugsweise das komplette Einführen des Rotors in einen Ofen. Besonders bevorzugt wird als Ofen ein Umluftofen verwendet, wobei der Rotor vorzugsweise mindestens zwei oder mindestens drei Stunden in dem Ofen, also insbesondere dem Umluftofen, mit einer Temperatur von über 100° oder über 120° gelagert wird. Der Ofen kann auch ein Durchlaufofen sein, der also eine Zuführ- und eine Ausführöffnung aufweist und der Rotor beispielsweise auf einem Förderband von der Einführöffnung bis zur Ausführöffnung durch den Ofen transportiert wird.

Ein sicheres Fixieren der Spulen an den Polschuhen auch nach dem Abschalten des Stroms in den Spulen wird somit möglich.

Gemäß einer weiteren Ausführungsform werden vor dem Anordnen der benachbarten Spulen die Lagen der Spulen jeweils voneinander isoliert und/oder imprägniert. Dies kann beispielsweise durch Umwickeln der Spulen mit einem Band, vorzugsweise einem Textilband sein, das Bindemittelanteile oder dergleichen, beispielsweise ein Harz, aufweist. Durch Erwärmen der Spulen kann dieses Harz dann verflüssigt und zu einer festen Anordnung der Lagen der Spule zueinander führen. Die Lagen einer Spule sind so gegeneinander isoliert und fest zueinander ausgerichtet. Einer Verformung der Spule beim Herstellungsprozess kann somit entgegengewirkt werden.

Gemäß einerweiteren Ausführungsform wird vor dem Anordnen der Spulen an mindestens zwei benachbarten Polschuhen ein Kleber, insbesondere ein Zweikomponentenkleber, auf jeden der Polschuhe oderdie entsprechende Spule aufgebracht. Das heißt, der Kleber wird entweder auf den Polschuh, insbesondere im Bereich des Polschafts oder in dem Bereich, in dem jedenfalls eine Spule angeordnet werden soll, aufgebracht. Alternativ oder zusätzlich kann der Kleber auch auf der Lage der Spule aufgebracht werden, die nach dem Anordnen am Polschuh den Polschuh kontaktiert.

Durch das Erzeugen des Magnetfelds bei erfindungsgemäßer Einprägung des Stroms in die Spulen werden die Schenkel gegen den Polschaft gedrückt und durch den Kleber unabhängig von einem Tränkprozess am Polschaft fixiert. Somit kann zusätzlich oder sogar anstatt eines Tränkens und Ausbackens mit einer Wärmequelle auch durch Aufbringen des Klebers auf den Polschuh oder die unterste Lage der Spule erreicht werden, dass eine Spule sicher für den späteren Betrieb am Polschuh gehalten wird.

Gemäß einer weiteren Ausführungsform werden die Spulen nach dem Anordnen die Spulen und vor dem Einspeisen eines Stroms oder Anlegen einer Spannung in bestimmter Weise so geschaltet, dass der Umlaufsinn einer technischen Stromrichtung in jeder der benachbarten Spulen gleich ist, wobei mehrere Spulen hierzu in Reihe und/oder parallel mit einer einzigen Energiequelle verbunden werden. Vorzugsweise wird eine Vorrichtung verwendet, um die Spulen gemäß dieser Ausführungsform zu schalten. Eine Energiequelle zum Einprägen des Stroms in die Spulen muss demnach über vergleichsweise weniger Anschlüsse verfügen als Anschlüsse durch die Spulen bereitgestellt sind. Vielmehr ist eine Schaltung der Spulen untereinander vorgesehen, um auch Fehler bei der Polung, also gezielten Erzeugung der Umlaufrichtung des Stroms, der Spulen zu vermeiden.

Gemäß einerweiteren Ausführungsform wird die Schaltung der benachbarten Spulen nach dem Einspeisen eines Stroms oder Anlegen einer Spannung, insbesondere nachdem die Spulen fest mit dem jeweiligen Polschuh verbunden, also an diesem fixiert, sind, geändert. Die Schaltung wird insbesondere derart geändert, dass ein Umlaufsinn einer technischen Stromrichtung in den benachbarten Spulen unterschiedlich zueinander ist. Vorzugsweise erfolgt dies mit derselben Vorrichtung, die bereits zum Schalten der benachbarten Spulen nach dem Anordnen verwendet wurde. Durch einfaches Ändern der Schaltung der Spulen kann so auch ein Betrieb des Rotors sicher ausgeführt werden.

Gemäß einer weiteren Ausführungsform umfasst der Schritt des Anordnens der Spulen das Anordnen von Spulen, die aus Flachband bestehen. Die Spulen sind vorzugsweise als Bandwicklungen oder Flachbandwicklung, insbesondere aus Aluminiumflachband, gewickelt. Eine Verwendung von Flachband zeichnet sich beispielsweise dadurch aus, dass ein flacher Leiter, nämlich ein Leiter, dessen Breite um ein Vielfaches größer ist als seine Höhe, um ein Spulenzentrum gewickelt wird, so dass die breiten Seiten des Leiters übereinandergestapelt werden. Eine derartige Spule in Form einer Bandwicklung weist insbesondere mit dem erfindungsgemäßen Einprägen des Stroms den besonderen Vorteil gegenüber dem Stand der Technik auf, das ein Bandagieren derartig in Bandwicklung gewickelter Spulen vor dem Fixieren am Polschuh entfällt. Üblicherweise müssen derartige Spulen, die in Bandwicklung gewickelt sind, bandagiert werden, um ihre Form beim Einprägen des Stroms während des Herstellungsprozesses zu behalten. Anderenfalls würden durch die aus dem Stand der Technik bekannten Schaltung die Spulen bei Einprägen des Stroms verformt werden, wogegen das Bandagieren wirkt. Dies ist aufgrund des erfindungsgemäßen Einprägens des Stroms nicht mehr nötig.

Somit können also vergleichsweise günstige Spulen aus Flachband, insbesondere aus Aluminium, die als Bandwicklung ausgebildet sind, und daher auch an sich günstig herstellbar sind, auch mit geringem zusätzlichem Aufwand gegenüber anderen Spulen durch das erfindungsgemäße Verfahren verwendet werden, da eine manuelle Fixierung oder Bandagierung dieser Spulen nicht nötig ist. Eine günstige Realisierung des Rotors ist somit möglich.

Gemäß einer weiteren Ausführungsform umfasst der Rotorgrundkörper mehr als zwei, insbesondere mehr als 50 oder mehr als 100 Polschuhe, wobei gemäß dem Verfahren an jedem der Polschuhe eine Spule angeordnet wird und in jede der Spulen ein Strom eingespeist oder eine Spannung angelegt wird, um einen Strom in jeder der Spulen zu erzeugen, so dass der Umlaufsinn einer technischen Stromrichtung in jeder der Spulen gleich ist. Hierdurch wird es ermöglicht, dass alle Spulen ein Magnetfeld erzeugen, das dafür sorgt, dass alle Schenkel aller Spulen gegen den jeweiligen Polschuh, um den die jeweilige Spule gewickelt ist, gedrückt werden, so dass eine sichere Fixierung aller Spulen ohne Verrücken oder ungewünschtes Verformen möglich ist.

Gemäß einer weiteren Ausführungsform umfasst eine Wicklung des Rotors alle Spulen des Rotors, wobei die Wicklung in mehrere Segmente unterteilt wird und alle Spulen eines Segments in Reihe geschaltet sind. Eine einfachere Schaltung zum Einprägen des Stroms in die Spulen ist somit einerseits möglich, wohingegen eine Lokalisierung von Defekten durch die Segmentierung und eine Kontrolle des Stroms einfacher möglich ist, so dass eine gleichmäßigere Einprägung in alle Spulen erfolgen kann.

Weiterhin umfasst die Erfindung eine Vorrichtung zum Herstellen eines Rotors eines Windenergieanlagengenerators, wobei die Vorrichtung insbesondere eingerichtet ist, während eines Verfahrens nach einer der vorgenannten Ausführungsformen verwendet zu werden.

Die Vorrichtung umfasst eine Schalteinrichtung oder zumindest zwei Schalter, um mindestens zwei unterschiedliche Schaltungen der Spulen bereitzustellen. Hierbei ist eine Schaltung der Spulen für den Betrieb des Rotors vorgesehen, wohingegen eine weitere Schaltung der Spulen vorgesehen ist, bei der ein Einspeisen eines Stroms oder ein Anlegen einer Spannung an die Spulen des Rotors zum Erzeugen eines Stroms in den Spulen führt, so dass ein Umlaufsinn einer technischen Stromrichtung in jeder der Spulen des Rotors gleich ist.

Vorzugsweise unterscheidet sich bei der Schaltung, die für den Betrieb vorgesehen ist, die Umlaufrichtung einer technischen Stromrichtung in benachbarten Spulen zueinander.

Ferner umfasst die Erfindung einen Rotor, der durch die Schritte des Verfahrens nach einer der vorgenannten Ausführungsformen hergestellt ist. Gemäß einer Ausführungsform umfasst der Rotor die vorgenannte Vorrichtung zum Herstellen des Rotors. Ferner betrifft die Erfindung eine Windenergieanlage mit dem Rotor gemäß einer der Ausführungsformen. Weitere Ausführungsformen ergeben sich anhand der in den Figuren näher erläuterten Ausführungsbeispiele. Hierbei zeigt:
- Figur 1: eine Windenergieanlage,
- Figur 2: einen Rotorgrundkörper mit Erregerpolen (ohne Wicklung),
- Figur 3: zwei benachbarte Polschuhe,
- Figur 4: eine Schaltung der Spulen im Betrieb,
- Figur 5: eine Schaltung der Spulen zum Herstellen,
- Figur 6: die Schritte des Verfahrens gemäß einem Ausführungsbeispiel und
- Figur 7: eine Spule aus Aluminiumflachdraht.

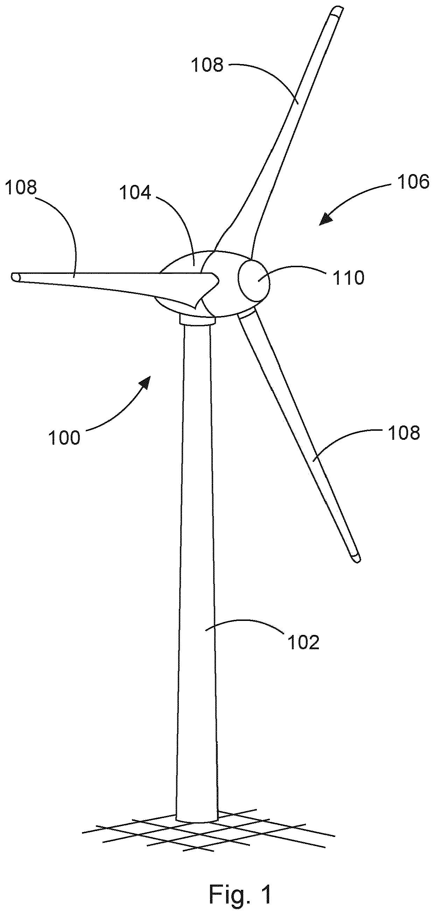

Figur 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage 100 durch den Wind in eine Drehbewegung versetzt und dreht somit auch einen elektrodynamischen Rotor oder Läufer eines Windenergieanlagengenerators, welcher direkt oder indirekt mit dem aerodynamischen Rotor 106 gekoppelt ist. Der elektrische Windenergieanlagengenerator ist in der Gondel 104 angeordnet und erzeugt elektrische Energie. Die Pitchwinkel der Rotorblätter 108 können durch Pitchmotoren an den Rotorblattwurzeln der jeweiligen Rotorblätter 108 verändert werden.

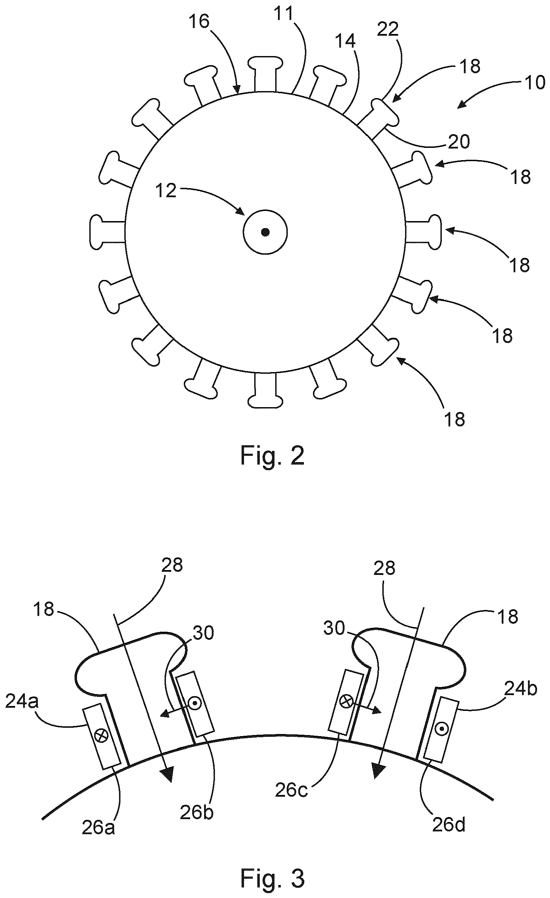

Figur 2 zeigt einen Rotorgrundkörper 11 eines Rotors 10 einer Windenergieanlage 100. Der Rotorgrundkörper 11 ist im Schnitt dargestellt. Der Rotorgrundkörper 11 rotiert im späteren Betrieb um eine Rotationsachse 12. Der Rotorgrundkörper 11 weist eine Rotorscheibe 14 auf, die in der Schnittdarstellung in Figur 2 wie eine Scheibe dargestellt ist aber tatsächlich eine Zylinderform mit einer Mantelfläche 16 aufweist. Auf der Mantelfläche 16 der Rotorscheibe 14 sind Polschuhe 18 gleich verteilt angeordnet. Die Polschuhe 18 weisen einen Polschaft 20 sowie einen Polkopf 22 auf. Um den Polschaft 20 herum sind Spulen anordnenbar, um eine Wicklung bereitzustellen, mit der ein Erregerfeld des Rotors 10 erzeugbar ist.

Figur 3 zeigt zwei benachbarte Polschuhe 18, die im Bereich ihres Polschafts 20 mit jeweils einer Spule 24a, 24b bereitgestellt sind. Wieder ist ein Schnitt in Figur 3 dargestellt, so dass keine Wickelköpfe der Spulen 24a, 24b dargestellt sind, sondern lediglich zwei Schenkel 26a, 26b, 26c, 26d erkennbar sind. Demnach ist dem linken Polschuh 18 die Spule 24a mit ihren Schenkeln 26a, 26b zugeordnet und dem rechten Polschuh 18 ist die Spule 24b mit ihren Schenkeln 26c, 26d zugeorndet. In die Spulen 24a, 24b, die auch als benachbarte Spulen bezeichnet werden, wird nun erfindungsgemäß ein Strom eingeprägt oder es wird ein Strom in den Spulen 24a, 24b erzeugt, der in beiden Spulen 24a, 24b im jeweils linken Schenkel 26a, 26c in die Bildebene hineintritt und in den jeweils rechten Schenkeln 26b, 26d aus der Bildebene heraustritt. Die Umlaufrichtung oder der Umlaufsinn dertechnischen Stromrichtung ist in beiden Spulen somit gleich.

Hierdurch entstehen Magnetfelder 28 in beiden benachbarten Spulen 24a, 24b, die jeweils radial nach innen zeigen. Die Magnetfelder 28 sind hier nur ausschnittsweise im Zentrum der jeweiligen Spulen 24a, 24b durch einen Pfeil dargestellt. Tatsächlich verlaufen die Magnetfelder 28 in geschlossenen Linien und somit zwischen den Spulen in entgegengesetzter Richtung. Die vorliegende Darstellung der Magnetfelder 28 ist daher zur besseren Übersichtlichkeit gewählt. Durch diese Magnetfelder sowie den Strom entsteht eine Kraft 30, die in den Schenkeln 26a, 26b, 26c, 26d in Richtung auf den Polschaft 20 gerichtet ist. Die Spulenschenkel 26a, 26b, 26c, 26d werden also durch den eingeprägten Strom und das daraus resultierende Magnetfeld gegen die Polschuhe 18 gedrückt. Es sei darauf hingewiesen, dass die Spulen 24a, 24b nur exemplarisch dargestellt sind und tatsächlich jeder Schenkel 26a, 26b, 26c, 26d durch mehrlagiges Wickeln der Spulen aus mehreren übereinandergeschichteten Lagen gebildet ist. Die Lagen sind zur besseren Übersicht nicht dargestellt.

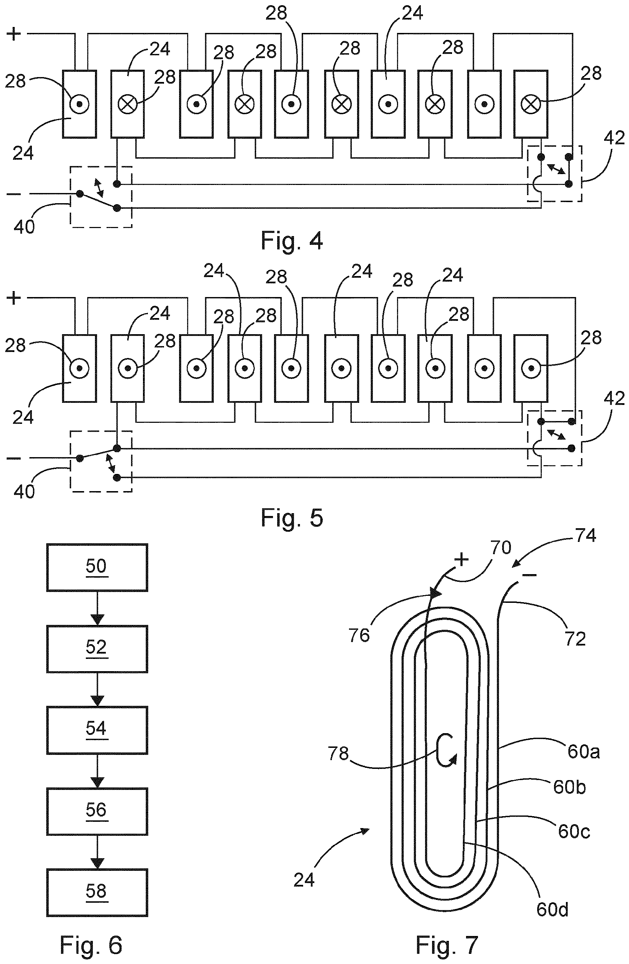

Figur 4 zeigt eine Schaltung einer Gruppe, die auch als Segment bezeichnet werden kann, oder aller Spulen 24 eines Rotors 10. Die Schaltung, wie sie in Figur 4 dargestellt ist, entspricht einer üblichen Schaltung eines Rotors mit einer Wicklung zum Erzeugen einer Erregung in einem Windenergieanlagengenerator. Es wurden jedoch zwei Schalter 40, 42 hinzugefügt, um eine erfindungsgemäße Schaltung, wie sie in Figur 5 dargestellt ist, zu realisieren. In Figur 4 ist die Schaltung, die auch für den Betrieb verwendet wird, so durch den Schalter 40, 42 geschaltet, dass die Magnetfelder 28 jeweils benachbarter Spulen 24 in entgegengesetzte Richtungen zeigen.

Durch Umschalten mit den Schaltern 40, 42, wie es sodann in Figur 5 dargestellt ist, sind die Spulen 24 derart geschaltet, dass die Magnetfelder 28 aller Spulen 24 in dieselbe Richtung zeigen.

Die Schalter 40, 42 werden vorzugsweise als Bestandteil des Rotors 10 bereitgestellt und die Schaltung kann dann nach der Herstellung durch einfaches Umschalten der Schalter 40, 42 im Betrieb eingesetzt werden.

Figur 6 zeigt die Schritte zum Herstellen des Verfahrens. In einem Schritt 50 wird ein Rotorgrundkörper 11 mit mehreren Polschuhen 18 bereitgestellt. Im Schritt 52 werde Spulen an den Polschuhen angeordnet. Im Schritt 54 wird der Rotorgrundkörper 11 mit den Spulen 24 getränkt und im Schritt 56 ein Strom in die Spulen eingespeist oder eine Spannung an die Spulen angelegt, um einen Strom in den Spulen zu erzeugen. Der Strom in den Spulen wird hierbei derart erzeugt, dass der Umlaufsinn einer technischen Stromrichtung in jeder der Spulen gleich ist. Im Schritt 58 wird der Rotor dann erwärmt.

Figur 7 zeigt eine Spule 24, die mehrere Windungen aufweist. Jede Windung entspricht einer von mehreren Lagen 60a, 60b, 60c, 60d der Spule 24. Die Spule 24 weist zwei Anschlüsse 70, 72 auf und es wird ein Strom durch Anschließen der Anschlüsse 70, 72 an eine Energiequelle 74 eingeprägt, der eine technische Stromrichtung 76 aufweist, die hier einem Umlaufsinn 78 entspricht, wobei der Umlaufsinn 78 hier als gegen den Uhrzeiger oder rechtsdrehend bezeichnet werden kann.

## Patentansprüche

1. Verfahren zum Herstellen eines Rotors (10) eines Windenergieanlagengenerators einer Windenergieanlage (100) umfassend die Schritte:
- Bereitstellen (50) eines Rotorgrundkörpers (11) mit mehreren Polschuhen (18),
- Anordnen (52) einer Spule (24) jeweils an mindestens zwei benachbarten Polschuhen (18), um mindestens zwei benachbarte Spulen (24) zu erhalten,
- Einspeisen (56) eines Stroms in oder Anlegen einer Spannung an die benachbarten Spulen (24) zum Erzeugen eines Stroms in den benachbarten Spulen (24), um die Spulen zu erwärmen,
**dadurch gekennzeichnet dass**
ein Strom in den benachbarten Spulen (24) erzeugt wird, so dass der Umlaufsinn (78) einer technischen Stromrichtung (76) in jeder der benachbarten Spulen (24) gleich ist.

2. Verfahren nach Anspruch 1, wobei der Rotor (10), umfassend den Rotorgrundkörper (11) mit daran angeordneten Spulen (24), vor dem Einspeisen eines Stroms in oder Anlegen einer Spannung an die benachbarten Spulen (24), vorzugsweise in Bindemittel, getränkt wird.

3. Verfahren nach Anspruch 1, wobei nach oder während des Einspeisens eines Stroms in oder Anlegen einer Spannung an die benachbarten Spulen (24) der Rotor (10), umfassend den Rotorgrundkörper (11) mit daran angeordneten Spulen (24), mit einer Wärmequelle erwärmt wird, wobei der Rotor (10) vorzugsweise mit einem Umluftofen, insbesondere bei einer Temperatur von über 100°, besonders bevorzugt für mindestens zwei Stunden, erwärmt wird.

4. Verfahren nach einem der vorhergehenden Ansprüche, wobei vor dem Anordnen der Spulen (24) an mindestens zwei benachbarten Polschuhen (18) die Lagen der Spulen (24) jeweils imprägniert und/oder isoliert werden.

5. Verfahren nach einem der vorhergehenden Ansprüche, wobei vor dem Anordnen der Spulen (24) an den mindestens zwei benachbarten Polschuhen (18) ein Kleber, insbesondere ein Zweikomponentenkleber,
a) auf den mindestens zwei benachbarten Polschuhen (18), insbesondere an einem jeweiligen Polschaft oder in Bereichen, in denen die Spulen (24) jeweils angeordnet werden, oder
b) auf der Lage jeder der Spulen (24), die jeweils zu einem der zwei benachbarten Polschuhe (18) zeigt,
aufgebracht wird.

6. Verfahren nach einem der vorhergehenden Ansprüche, wobei die Spulen (24) nach dem Anordnen und vor dem Einspeisen eines Stroms oder Anlegen einer Spannung geschaltet werden, insbesondere derart, dass der Umlaufsinn (78) einer technischen Stromrichtung (76) in jeder der benachbarten Spulen (24) gleich ist, wobei mehrere Spulen (24) parallel und/oder seriell mit einer einzigen Energiequelle (74) verbunden werden, wobei vorzugsweise eine Vorrichtung (40, 42) zum Schalten verwendet wird.

7. Verfahren nach einem der vorhergehenden Ansprüche, wobei die Schaltung der benachbarten Spulen (24) nach dem Einspeisen eines Stroms oder Anlegen einer Spannung geändert wird, insbesondere so dass der Umlaufsinn (78) einer technischen Stromrichtung (76) in den benachbarten Spulen (24) der mindestens zwei Rotorpole unterschiedlich zueinander ist.

8. Verfahren nach einem der vorhergehenden Ansprüche, wobei beim Anordnen der Spulen (24) Spulen, die aus Flachband, insbesondere aus Aluminiumflachband bestehen und/oder vorzugsweise als Bandwicklung gewickelt sind, angeordnet werden.

9. Verfahren nach einem der vorhergehenden Ansprüche, wobei an allen Polschuhen (18) des Rotorgrundkörpers (11) Spulen (24) angeordnet werden und in alle Spulen (24) ein Strom eingespeist wird oder an alle Spulen (24) eine Spannung angelegt wird, um einen Strom in allen Spulen (24) zu erzeugen, wobei ein Strom in allen Spulen (24) erzeugt wird, so dass der Umlaufsinn (78) einer technischen Stromrichtung aller Spulen (24) aller Rotorpole gleich ist.

10. Verfahren nach einem der vorhergehenden Ansprüche, wobei alle Spulen (24) des Rotors (10) als Wicklung bezeichnet werden und die Wicklung in mehrere Segmente unterteilt wird, die jeweils aus mehreren Spulen (24) bestehen, wobei alle Spulen (24) eines Segments in Reihe geschaltet werden.

11. Vorrichtung zum Herstellen eines Rotors (10) einer Windenergieanlage (100), wobei die Vorrichtung eingerichtet ist, während eines Verfahrens zum Herstellen eines Rotors (10) nach einem der Ansprüche 1 bis 10 verwendet zu werden, wobei die Vorrichtung zwei Schalter (40, 42) aufweist, um die Schaltung aller Spulen (24) des Rotors (10) oder zumindest eines Segments, die für den Betrieb des Rotors (10) vorgesehen ist, fürdas Herstellungsverfahren umzuschalten, insbesondere derart, dass zumindest ein Strom in benachbarten Spulen (24) erzeugt wird, so dass der Umlaufsinn (78) einer technischen Stromrichtung in jeder der benachbarten Spulen (24) der mindestens zwei Rotorpole gleich ist.

12. Rotor (10), hergestellt durch die Schritte des Verfahrens nach einem der Ansprüche 1 bis 10.

13. Rotor (10) nach Anspruch 12, wobei der Rotor (10) die Vorrichtung nach Anspruch 11 umfasst.

14. Windenergieanlage (100) mit einem Rotor (10) nach Anspruch 12 oder 13.

## Claims

1. Method for producing a rotor (10) of a wind turbine generator of a wind turbine (100) comprising the steps of:
- providing (50) a rotor base member (11) with a plurality of pole shoes (18),
- arranging (52) a coil (24) in each case at least at two adjacent pole shoes (18) in order to obtain at least two adjacent coils (24),
- feeding (58) a current into or applying a voltage to the adjacent coils (24) in order to generate a current in the adjacent coils (24) in order to heat the coils, **characterised in that**
a current is generated in the adjacent coils (24) so that the circulation direction (78) is identical to a technical flow direction (76) in each of the adjacent coils (24).

2. Method according to claim 1, wherein the rotor (10) comprising the rotor base member (11) with coils (24) arranged thereon, before feeding a current into or applying a voltage to the adjacent coils (24), is preferably immersed in binding agent.

3. Method according to claim,1, wherein after or during feeding of a current into or applying a voltage to the adjacent coils (24), the rotor (10) comprising the rotor base member (11) with coils (24) arranged thereon is heated with a heat source, wherein the rotor (10) is heated, preferably with a convection oven, in particular at a temperature of over 100°, in a particularly preferred manner for at least two hours.

4. Method according to any one of the preceding claims, wherein, before the arrangement of the coils (24) on at least two adjacent pole shoes (18), the positions of the coils (24) are in each case impregnated and/or insulated.

5. Method according to any one of the preceding claims, wherein, prior to the arrangement of the coils (24) on the at least two adjacent pole shoes (18), an adhesive, in particular a two-component adhesive, is applied
a) to the at least two adjacent pole shoes (18), in particular to a respective pole shaft or in regions in which the coils (24) are arranged in each case, or
b) at the position of each of the coils (24) which is directed in each case towards one of the two adjacent pole shoes (18).

6. Method according to any one of the preceding claims, wherein the coils (24) are connected after the arrangement and before feeding a current or applying a voltage, in particular in such a manner that the circulation direction (78) is identical to a technical flow direction (76) in each of the adjacent coils (24), wherein a plurality of coils (24) are connected in parallel and/or in series to a single energy source (74), wherein an apparatus (40, 42) is preferably used for switching.

7. Method according to any one of the preceding claims, wherein the connection of the adjacent coils (24) after feeding a current or applying a voltage is changed, in particular so that the circulation direction (78) of a technical flow direction (76) in the adjacent coils (24) of the at least two rotor poles is mutually different.

8. Method according to any one of the preceding claims, wherein, when the coils (24) are arranged, coils which comprise a flat strip, in particular an aluminium flat strip, and/or which are preferably wound as a strip winding are arranged.

9. Method according to any one of the preceding claims, wherein on all the pole shoes (18) of the rotor base member (11) coils (24) are arranged and in all the coils (24) a current is fed or a voltage is applied to all the coils (24) in order to generate a current in all the coils (24), wherein a current (24) is generated in all the coils (24) so that the circulation direction (78) of a technical flow direction of all the coils (24) of all the rotor poles is identical.

10. Method according to any one of the preceding claims, wherein all the coils (24) of the rotor (10) are referred to as a winding, and the winding is subdivided into a plurality of segments which each comprise several coils (24), wherein all the coils (24) of a segment are connected in series.

11. Apparatus for producing a rotor (10) of a wind turbine (100), wherein the apparatus is configured to be used during a method for producing a rotor (10) according to any one of claim 1 to 10, wherein the apparatus has two switches (40, 42) in order to switch all the coils (24) of the rotor (10) or at least a segment which is provided for the operation of the rotor (10) for the production method, in particular in such a manner that at least a current is generated in adjacent coils (24) so that the circulation direction (78) is identical to a technical flow direction in each of the adjacent coils (24) of the at least two rotor poles.

12. Rotor (10) produced using the steps of the method according to any one of claims 1 to 10.

13. Rotor (10) according to claim 12, wherein the rotor (10) comprises the apparatus according to claim 11.

14. Wind turbine (100) having a rotor (10) according to claim 12 or 13.

## Revendications

1. Procédé de fabrication d'un rotor (10) d'un générateur d'éolienne d'une éolienne (100), comprenant les étapes :
- de fourniture (50) d'un corps de base de rotor (11) avec plusieurs masses polaires (18),
- d'agencement (52) d'une bobine (24) respectivement sur au moins deux masses polaires (18) adjacentes pour obtenir au moins deux bobines (24) adjacentes,
- d'injection (56) d'un courant dans les bobines (24) adjacentes ou d'application d'une tension sur celles-ci pour générer un courant dans les bobines (24) adjacentes pour réchauffer les bobines,
**caractérisé en ce que**
un courant est généré dans les bobines (24) adjacentes de sorte que le sens de circulation (78) est identique à la direction de courant technique (76) dans chacune des bobines (24) adjacentes.

2. Procédé selon la revendication 1, dans lequel le rotor (10) comprenant le corps de base de rotor (11) avec des bobines (24) agencées dessus, est imprégné, de préférence de liant, avant l'injection d'un courant dans les bobines (24) adjacentes ou l'application d'une tension sur celles-ci.

3. Procédé selon la revendication 1, dans lequel le rotor (10), comprenant le corps de base de rotor (11) avec des bobines (24) agencées sur celui-ci, est chauffé avec une source de chaleur après ou pendant l'injection d'un courant dans les bobines (24) adjacentes ou avant ou pendant l'application d'une tension sur celles-ci, dans lequel le rotor (10) est chauffé de manière particulièrement préférée pendant au moins deux heures, en particulier à une température supérieure à 100° de préférence avec un four à circulation d'air.

4. Procédé selon l'une quelconque des revendications précédentes, dans lequel les couches des bobines (24) sont respectivement imbibées et/ou isolées avant l'agencement des bobines (24) sur au moins deux masses polaires (18) adjacentes.

5. Procédé selon l'une quelconque des revendications précédentes, dans lequel une colle, en particulier une colle à deux composants, est appliquée
a) sur les au moins deux masses polaires (18) adjacentes, en particulier sur une tige polaire respective ou dans des zones, dans lesquelles les bobines (24) sont respectivement agencées, ou
b) sur la couche de chacune des bobines (24), qui pointe respectivement vers une des deux masses polaires (18) adjacentes,
avant l'agencement des bobines (24) sur les au moins deux masses polaires (18) adjacentes.

6. Procédé selon l'une quelconque des revendications précédentes, dans lequel les bobines (24) sont branchées après l'agencement et avant l'injection d'un courant ou l'application d'une tension, en particulier de telle manière que le sens de circulation (78) est identique à une direction de courant technique (76) dans chacune des bobines (24) adjacentes, dans lequel plusieurs bobines (24) sont reliées de manière parallèle et/ou en série à une source d'énergie (74) unique, dans lequel de préférence un dispositif (40, 42) de branchement est utilisé.

7. Procédé selon l'une quelconque des revendications précédentes, dans lequel le branchement des bobines (24) adjacentes est modifié après l'injection d'un courant ou l'application d'une tension, en particulier de telle sorte que le sens de circulation (78) d'une direction de courant technique (76) dans les bobines (24) adjacentes des au moins deux pôles de rotor est différent l'un par rapport à l'autre.

8. Procédé selon l'une quelconque des revendications précédentes, dans lequel des bobines, qui sont constituées d'une bande plate, en particulier d'une bande plate en aluminium, et/ou sont enroulées de préférence en tant qu'enroulement de bande, sont agencées lors de l'agencement des bobines (24).

9. Procédé selon l'une quelconque des revendications précédentes, dans lequel des bobines (24) sont agencées sur toutes les masses polaires (18) du corps de base de rotor (11) et un courant est injecté dans toutes les bobines (24) ou une tension est appliquée sur toutes les bobines (24) pour générer un courant dans toutes les bobines (24), dans lequel un courant est généré dans toutes les bobines (24) de telle sorte que le sens de circulation (78) est identique à une direction de courant technique de toutes les bobines (24) de tous les pôles de rotor.

10. Procédé selon l'une quelconque des revendications précédentes, dans lequel toutes les bobines (24) du rotor (10) sont désignées en tant qu'enroulement et l'enroulement est divisé en plusieurs segments, qui sont constitués respectivement de plusieurs bobines (24), dans lequel toutes les bobines (24) d'un segment sont branchées en série.

11. Dispositif de fabrication d'un rotor (10) d'une éolienne (100), dans lequel le dispositif est mis au point pour être utilisé au cours d'un procédé de fabrication d'un rotor (10) selon l'une quelconque des revendications 1 à 10, dans lequel le dispositif présente deux commutateurs (40, 42) pour modifier le branchement de toutes les bobines (24) du rotor (10) ou au moins d'un segment, qui est prévu pour le fonctionnement du rotor (10), pour le procédé de fabrication, en particulier de telle manière qu'au moins un courant est généré dans des bobines (24) adjacentes de sorte que le sens de circulation (78) est identique à une direction de courant technique dans chacune des bobines (24) adjacentes des deux au moins deux pôles de rotor.

12. Rotor (10) fabriqué par les étapes du procédé selon l'une quelconque des revendications 1 à 10.

13. Rotor (10) selon la revendication 12, dans lequel le rotor (10) comprend le dispositif selon la revendication 11.

14. Eolienne (100) avec un rotor (10) selon la revendication 12 ou 13.
